(19) **Europäisches Patentamt**
**European Patent Office**
**Office européen des brevets**

(11) **EP 1 347 835 B1**

(12) **FASCICULE DE BREVET EUROPEEN**

(45) Date de publication et mention
de la délivrance du brevet:
**31.08.2011 Bulletin 2011/35**

(51) Int Cl.:
*B02C 23/06* $^{(2006.01)}$     *C09C 3/10* $^{(2006.01)}$
*C09C 3/04* $^{(2006.01)}$     *C09D 17/00* $^{(2006.01)}$
*D21H 19/58* $^{(2006.01)}$     *B01F 17/00* $^{(2006.01)}$
*B01F 17/52* $^{(2006.01)}$

(21) Numéro de dépôt: **01994888.4**

(22) Date de dépôt: **18.12.2001**

(86) Numéro de dépôt international:
**PCT/FR2001/004027**

(87) Numéro de publication internationale:
**WO 2002/049765 (27.06.2002 Gazette 2002/26)**

(54) **AGENT D'AIDE AU BROYAGE ET/OU DE DISPERSION DE MATERIAUX MINERAUX EN SUSPENSION AQUEUSE. SUSPENSIONS ET LEURS UTILISATIONS**

MAHLHILFSMITTEL UND/ODER DISPERGIERMITTEL MINERALISCHER STOFFE IN WÄSSERIGER SUSPENSION, SUSPENSIONEN UND DEREN VERWENDUNGEN

GRINDING AND/OR DISPERSING AID OF MINERAL MATERIALS IN AQUEOUS SUSPENSION, RESULTING AQUEOUS SUSPENSIONS AND USES THEREOF

(84) Etats contractants désignés:
**AT BE CH CY DE DK ES FI FR GB GR IE IT LI LU MC NL PT SE TR**

(30) Priorité: **20.12.2000 FR 0016683**

(43) Date de publication de la demande:
**01.10.2003 Bulletin 2003/40**

(73) Titulaire: **COATEX S.A.S.**
**69730 Genay (FR)**

(72) Inventeurs:
• **MONGOIN, Jacques**
**F-69550 Quincieux (FR)**

• **JACQUEMET, Christian**
**F-69005 Lyon (FR)**
• **SUAU, Jean-Marc**
**F-69480 Lucenay (FR)**

(74) Mandataire: **Richebourg, Michel François**
**Cabinet Michel Richebourg**
**"Le Clos du Golf"**
**69 Rue Saint-Simon**
**42000 Saint Etienne (FR)**

(56) Documents cités:
**EP-A- 0 100 948     EP-A- 0 113 048**
**EP-A- 0 278 880     EP-A- 0 542 643**
**EP-A- 0 542 644     WO-A-01/48093**
**WO-A-99/23185**

**Description**

La présente invention concerne le secteur technique des charges minérales, notamment pour les applications papetières, et leurs traitements appropriés afin d'améliorer soit le procédé de fabrication de la feuille de papier, soit ses propriétés ainsi que d'autres applications telles que notamment la peinture ou les matières plastiques.

L'invention concerne l'utilisation d'homopolymères et/ou copolymères de l'acide acrylique et/ou méthacrylique avec un ou plusieurs monomères acryliques, vinyliques ou allyliques comme agent d'aide au broyage et/ou de dispersion de pigments et/ou charges minérales en suspension aqueuse.

L'invention concerne également lesdites suspensions aqueuses de pigments et/ou charges minérales et leurs utilisations notamment dans les domaines du papier, comme entre autre la fabrication ou le couchage du papier, avec obtention de propriétés d'imprimabilité du papier améliorées, ainsi que dans les domaines de la peinture ou des matières plastiques.

Des papiers ainsi que des peintures et/ou matières plastiques peuvent être fabriqué mettant en oeuvre lesdites suspensions.

Depuis longtemps déjà l'homme de l'art connaît l'utilisation d'agents de broyage et/ou de dispersion de particules minérales en suspension aqueuse constitués par des polymères et/ou copolymères acryliques, de faible poids moléculaire, totalement ou partiellement neutralisés par divers agents de neutralisation (FR 2 603 042, EP 0 100 947, EP 0 127 388, EP 0 129 329, EP 0 278 880, EP 0 542 644, EP 0 850 282).

L'homme de l'art connaît également l'utilisation d'agents de broyage et/ou de dispersion constitués par la fraction des polymères et/ou copolymères acryliques dont la viscosité spécifique est comprise entre 0,3 et 0,8 (brevets FR 2 488 814, EP 0 100 948, EP 0 542 643)..

Mais ces divers types d'agents de broyage et/ou de dispersion de faible poids moléculaire, qui permettent d'obtenir des suspensions aqueuses de particules minérales affinées, fluides et stables dans le temps, ne permettent pas d'aboutir à des suspensions aqueuses de pigments et/ou charges minérales, notamment de carbonate de calcium, disposant d'une faible quantité d'agent de broyage non adsorbé aux surfaces des particules minérales et présent dans la phase aqueuse de la suspension.
Cette quantité d'agent de broyage non adsorbé aux surfaces des particules minérales et présent dans la phase aqueuse de la suspension est appelée, dans la suite de la présente demande, quantité d'agent de broyage libre.

De même, quand on parlera dans la suite de la présente demande, de quantité de dispersant libre, il s'agira de quantité de dispersant non adsorbé aux surfaces des particules minérales et présent dans la phase aqueuse de la suspension.

En effet, la phase aqueuse de ces suspensions aqueuses de l'art antérieur possède des quantités élevées de dispersant et/ou agent d'aide au broyage libre présentant alors l'inconvénient de détériorer les propriétés d'imprimabilité du papier couché obtenu par la mise en oeuvre desdites suspensions aqueuses de particules minérales ainsi que l'inconvénient de nécessiter l'utilisation de fortes quantités d'agent cationique mis en oeuvre comme agent de rétention de la charge minérale sur la fibre cellulosique du papier lorsque les suspensions sont utilisées pour la fabrication des feuilles de papier.

Confrontée à ce problème d'amélioration des propriétés d'imprimabilité du papier couché ou de diminution de la quantité d'agent de rétention de charges lors de la fabrication de la feuille de papier, lié à la diminution de la quantité de dispersant et/ou d'agent d'aide au broyage libre dans la phase aqueuse des suspensions aqueuses de particules minérales mises en oeuvre dans la fabrication ou le couchage du papier, la Demanderesse a alors trouvé, de manière surprenante que la sélection simultanée du taux molaire des sites acides actifs restés acides et du taux molaire de la neutralisation de ces sites acides actifs, par des ions au moins bifonctionnels, des homopolymères et/ou des copolymères hydrosolubles de l'acide acrylique et/ou méthacrylique avec un ou plusieurs monomères acryliques, vinyliques ou allyliques permet d'obtenir des suspensions aqueuses de pigments et/ou charges minérales, notamment de carbonate de calcium, disposant d'une faible quantité de dispersant et/ou d'agent d'aide au broyage libre présent dans la phase aqueuse de la suspension permettant d'aboutir à des formulations papetières telles que notamment les sauces de couchage papetières ou encore la charge de masse du papier avec les propriétés décrites ci-après.

En effet, l'utilisation, selon l'invention, desdites suspensions aqueuses dans la fabrication du papier comme charge de masse permet de réduire la quantité d'agent cationique utilisé comme agent de rétention de la charge minérale sur la fibre cellulosique du papier.

Parallèlement à ces propriétés du papier, l'utilisation, selon l'invention, desdites suspensions aqueuses lors du couchage du papier permet d'obtenir un papier couché avec des propriétés d'imprimabilité accrues.

Ainsi un des buts de l'invention est l'utilisation d'homopolymères et/ou copolymères hydrosolubles de l'acide acrylique et/ou méthacrylique avec un ou plusieurs monomères acryliques, vinyliques ou allyliques spécifiquement neutralisé, comme agent d'aide au broyage et/ou de dispersion de pigments et/ou charges minérales en suspension aqueuse permettant d'obtenir des suspensions aqueuses de pigments et/ou charges minérales, notamment de carbonate de calcium, disposant d'une faible quantité de dispersant et/ou d'agent d'aide au broyage libre présent dans la phase aqueuse de la suspension permettant d'aboutir à des formulations papetières telles que notamment les sauces de couchage papetières ou encore la charge de masse du papier, présentant les propriétés précitées.

Un autre but de l'invention, outre ceux déjà mentionnés, est de fournir des suspensions aqueuses de matières minérales, obtenues par dispersion et caractérisées en ce qu'elles disposent d'une faible quantité de dispersant libre présent dans la phase aqueuse et en ce qu'elles contiennent de 0,05 % à 5 % en poids sec, et préférentiellement de 0,2 % à 1,0 % en poids sec par rapport au poids sec de matière minérale, d'agent de dispersion de particules minérales en suspension aqueuse mis en oeuvre selon l'invention.

De même, un autre but de l'invention, outre ceux déjà mentionnés, est de fournir des suspensions aqueuses de matières minérales affinées, obtenues par broyage et caractérisées en ce qu'elles disposent d'une faible quantité d'agent d'aide au broyage libre présent dans la phase aqueuse et en ce qu'elles contiennent de 0,05 % à 5 % en poids sec, et préférentiellement de 0,2 % à 1,0 % en poids sec par rapport au poids sec de matière minérale, d'agent d'aide au broyage de suspension aqueuse mis en oeuvre selon l'invention.

Enfin, un but supplémentaire de l'invention concerne l'utilisation de ces suspensions aqueuses minérales dans les domaines du plastique, de la peinture, du couchage du papier et de la charge de masse lors de la fabrication de la feuille de papier.

Contrairement à l'enseignement de l'art antérieur, la Demanderesse a trouvé de manière surprenante que la sélection du pourcentage molaire des sites acides actifs du polymère non neutralisés doit être compris entre 10 % et 60 % et celui de la neutralisation par au moins un agent de neutralisation au moins bifonctionnel doit être compris entre 10 % et 80 % pour obtenir les propriétés précitées. Le complément à 100 % des sites acides actifs du polymère est neutralisé par des agents de neutralisation monofonctionnels.

Les agents de neutralisation au moins bifonctionnels sont choisis parmi les hydroxydes et/ou oxydes des cations alcalino-terreux ou métalliques, en particulier les hydroxydes et/ou oxydes de magnésium, calcium, baryum, zinc, aluminium, ou bien parmi les amines bifonctionnelles, ou leurs mélanges et sont préférentiellement choisis parmi les hydroxydes et/ou oxydes de calcium ou magnésium, et leurs mélanges.

Les agents de neutralisation monofonctionnels sont choisis parmi les hydroxydes des cations alcalins, en particulier le sodium et le potassium, ou encore le lithium, l'ammoniaque, ou bien parmi les amines primaires ou secondaires aliphatiques et/ou cycliques telles que par exemple les éthanolamines, la mono et diéthylamine ou encore la cyclohexylamine, ou leurs mélanges et sont très particulièrement choisis parmi les composés contenant l'ion sodium.

Ces homopolymères et/ou copolymères résultent des divers procédés connus de la polymérisation radicalaire mettant en oeuvre les initiateurs de polymérisation bien connus de l'homme du métier tels que par exemple des composés à base d'hydroxylamine ou encore mettant en oeuvre les initiateurs de polymérisation tels que les peroxydes comme notamment l'eau oxygénée, l'hydroperoxyde de tertio-butyle ou les persels comme notamment le persulfate de sodium, le persulfate d'ammonium, le persulfate de potassium ou analogues, ou encore l'hypophosphite de sodium, l'acide hypophosphoreux ou bien encore l'acide phosphoreux et/ou leurs sels en présence éventuelle de sels métalliques par exemple de fer ou de cuivre dans un milieu de polymérisation qui peut être l'eau, le méthanol, l'éthanol, le propanol, l'isopropanol, les butanols, ou leurs mélanges ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, le xylène, et en présence éventuellement de régulateurs de masse moléculaire encore appelés agents de transfert tels que notamment le mercaptoéthanol, l'acide thioglycolique et ses esters, le n-dodécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le chlorure de méthylène, les éthers de monopropylène glycol, ou leurs mélanges et analogues.

Ces homopolymères utilisés comme agent d'aide au broyage et/ou de dispersion selon l'invention résultent des divers procédés de polymérisation radicalaire de l'acide acrylique ou méthacrylique.

Ces copolymères utilisés comme agent d'aide au broyage et/ou de dispersion selon l'invention résultent des divers procédés de copolymérisation radicalaire précités de l'acide acrylique ou méthacrylique avec l'un au moins des monomères choisis parmi l'acide acrylique, l'acide méthacrylique, l'acide itaconique, l'acide crotonique, l'acide fumarique, l'anhydride maléique et/ou l'acide 2-acrylamido-2-méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-1-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy)propane sulfonique, l'acide 2-méthyl-2-propène-1-sulfonique, l'acide éthylène sulfonique, l'acide propène sulfonique, l'acide 2-méthyl sulfonique, l'acide styrène sulfonique et/ou ses sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, les esters des acides acryliques ou méthacryliques tels que notamment l'acrylate d'éthyle, l'acrylate de butyle, le méthacrylate de méthyle, le phosphate d'acrylate ou méthacrylate d'éthylène ou propylène glycol ou bien encore parmi la vinylpyrrolidone, le vinylcaprolactame, l'isobutylène, le diisobutylène, l'acétate de vinyle, le styrène, l'alphaméthylstyrène, le vinylméthyléther, les allyliques tels que notamment l'allylamine et ses dérivés.

Ces homopolymères et/ou copolymères utilisés comme agent d'aide au broyage et/ou de dispersion selon l'invention résultant des divers procédés de polymérisation radicalaire précités peuvent être également traités par tout moyen connu pour l'isoler sous forme de poudre et l'utiliser sous cette forme.

Selon une autre variante, l'homopolymère ou le copolymère issu de la réaction de polymérisation peut, éventuellement avant ou après la réaction de neutralisation, être traité et séparé en plusieurs phases, selon des procédés statiques ou dynamiques connus de l'homme de l'art, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

L'une des phases correspond alors au polymère utilisé selon l'invention comme agent d'aide au broyage et/ou de dispersion de matières minérales en suspension aqueuse.

Ces homopolymères et/ou copolymères utilisés comme agent de dispersion et/ou d'aide au broyage selon l'invention sont sélectivement neutralisés de telle sorte que le pourcentage molaire des sites acides actifs du polymère non neutralisés est compris entre 10 % et 60 % et celui des sites acides actifs neutralisés par au moins un agent de neutralisation au moins bifonctionnel est compris entre 10 % et 80 %, le complément à 100 % des sites acides actifs du polymère étant neutralisé par des agents de neutralisation monofonctionnels.

De manière préférentielle, ces homopolymères et/ou copolymères utilisés comme agent de dispersion et/ou d'aide au broyage selon l'invention sont sélectivement neutralisés de telle sorte que le pourcentage molaire des sites acides actifs du polymère non neutralisés est compris entre 15 % et 30 % et celui des sites acides actifs neutralisés par au moins un agent de neutralisation au moins bifonctionnel est compris entre 15 % et 60 %, le complément à 100 % des sites acides actifs du polymère étant neutralisé par des agents de neutralisation monofonctionnels.

Ainsi selon l'invention, l'utilisation d'homopolymères et/ou copolymères de l'acide acrylique et/ou méthacrylique avec un ou plusieurs monomères acryliques, vinyliques ou allyliques comme agent de dispersion et/ou d'aide au broyage de pigments et/ou charges minérales en suspension aqueuse se caractérise en ce que lesdits homopolymères et/ou copolymères de l'acide acrylique et/ou méthacrylique avec un ou plusieurs monomères acryliques, vinyliques ou allyliques sont neutralisés de telle sorte que le pourcentage molaire des sites acides actifs du polymère non neutralisés est compris entre 10 % et 60 % et celui des sites acides actifs neutralisés par au moins un agent de neutralisation au moins bifonctionnel est compris entre 10 % et 80 %, le complément à 100 % des sites acides actifs du polymère étant neutralisé par des agents de neutralisation monofonctionnels.

De manière préférentielle, l'utilisation selon l'invention d'homopolymères et/ou copolymères de l'acide acrylique et/ou méthacrylique avec un ou plusieurs monomères acryliques, vinyliques ou allyliques comme agent d'aide au broyage et/ou de dispersion de pigments et/ou charges minérales en suspension aqueuse se caractérise en ce que lesdits homopolymères et/ou copolymères de l'acide acrylique et/ou méthacrylique avec un ou plusieurs monomères acryliques, vinyliques ou allyliques sont neutralisés de telle sorte que le pourcentage molaire des sites acides actifs du polymère non neutralisés est compris entre 15 % et 30 % et celui des sites acides actifs neutralisés par au moins un agent de neutralisation au moins bifonctionnel est compris entre 15 % et 60 %, le complément à 100 % des sites acides actifs du polymère étant neutralisé par des agents de neutralisation monofonctionnels.

Les homopolymères et/ou copolymères destinés à être utilisés selon l'invention comme agent d'aide au broyage et/ou de dispersion dans l'eau des particules minérales sont sélectionnés parmi les homopolymères ou copolymères ayant un poids moléculaire moyen en poids $M_w$ compris entre 1 000 et 50 000, préférentiellement entre 3 500 et 25 000, déterminé par chromatographie par perméation de gel (GPC) aqueuse dont les standards, utilisés comme étalons, appartiennent à une série de polyacrylates de sodium commercialisée par la société Polymer Standards Service sous les noms de PSS-PAA variant de 18K à 2K.

D'autre part, l'utilisation selon l'invention d'une sélection d'homopolymères et/ou copolymères hydrosolubles de l'acide acrylique et/ou méthacrylique avec un ou plusieurs monomères acryliques, vinyliques ou allyliques permet le broyage de substances minérales, notamment de carbonate de calcium, aboutissant à l'obtention de suspensions aqueuses de matières minérales affinées, fluides et stables dans le temps, disposant d'une faible quantité de dispersant libre présent dans la phase aqueuse de la suspension permettant d'aboutir à des formulations papetières telles que notamment les sauces de couchage papetières ou encore la charge de masse du papier, présentant les propriétés précitées.

Ainsi selon l'invention, les suspensions aqueuses de pigments et/ou charges minérales obtenues par broyage se caractérisent en ce qu'elles contiennent ledit agent d'aide au broyage et en ce que leur phase aqueuse contient moins de 10 % de la quantité d'agent d'aide au broyage initialement introduit dans la suspension avant l'opération de broyage.

De même selon l'invention, les suspensions aqueuses de pigments et/ou charges minérales obtenues par dispersion se caractérisent en ce qu'elles contiennent ledit agent de dispersion et en ce que leur phase aqueuse contient moins de 60 %, préférentiellement moins de 55 % de la quantité d'agent de dispersion initialement introduit dans la suspension.

Ces quantités d'agent d'aide au broyage et/ou de dispersion contenues dans la phase aqueuse des suspensions de pigments et/ou charges minérales selon l'invention encore appelées quantités de dispersant et/ou agent d'aide au broyage libre sont mesurées par la méthode de mesure décrite ci-après, appelée dans la présente demande, méthode TOC.

Le principe de cette mesure est le suivant :

On détermine la quantité de polymère (agent d'aide au broyage et/ou de dispersion mis en oeuvre selon l'invention) présent dans la solution avant le broyage ou la dispersion, à l'aide d'un TOC-mètre. On obtient la valeur COT 1.

La quantité de polymère (agent d'aide au broyage et/ou de dispersion mis en oeuvre selon l'invention) présent dans la solution après le broyage ou la dispersion, est mesuré après filtration de la suspension à l'aide du même TOC-mètre et donne la valeur COT 2.

Les quantités d'agent d'aide au broyage et/ou de dispersion contenues dans la phase aqueuse des suspensions de pigments et/ou charges minérales selon l'invention encore appelées quantités de dispersant et/ou agent d'aide au broyage libre sont alors exprimées par la relation :

$$\% \text{ de dispersant et/ou agent d'aide au broyage libre} = \frac{COT2}{COT1} \times 100$$

De manière pratique, la suspension de particules minérales à étudier est d'abord filtrée sur un filtre-presse "API Fluid Loss Measurement" de la société Baroïd équipé d'un papier filtre de 90 mm de diamètre (Whatman n° 50) et d'un tamis métallique.

La filtration est effectuée sous une pression de 100 psi (7 bars). Le filtrat obtenu est alors filtré de nouveau sur un filtre Millipore™ de porosité 0,2 micromètre.

Les eaux alors obtenues sont analysées à l'aide d'un TOC-mètre de marque LabTOC™ commercialisé par la société Spectrafrance permettant de déterminer le carbone organique total (COT) présent dans la solution par mesure du dégagement de gaz carbonique obtenu après oxydation totale de la matière organique catalysée par un rayonnement ultraviolet en présence de persulfate de sodium et d'acide phosphorique à des teneurs respectives de 2,5 % et 6,8 % et sous bullage d'oxygène.

Les suspensions aqueuses de pigment et/ou charge minérale se caractérisent également en ce que la charge et/ou le pigment est choisi parmi le carbonate de calcium naturel tel que notamment la calcite, la craie ou encore le marbre, le carbonate de calcium synthétique encore appelé carbonate de calcium précipité, les dolomies, l'hydroxyde de magnésium, le gypse, ou encore l'hydroxyde d'aluminium ou leurs mélanges ou toute autre charge et/ou pigment habituellement mis en oeuvre dans le domaine papetier, de la peinture et/ou des matières plastiques.

Les suspensions aqueuses de charges et/ou pigments obtenues par broyage selon l'invention, se caractérisent plus particulièrement en ce qu'elles contiennent de 0,05 % à 5 % en poids sec dudit agent par rapport au poids sec total des charges et/ou pigments, et encore plus particulièrement 0,2 % à 1,0 % en poids sec dudit agent par rapport au poids sec total des charges et/ou pigments et en ce que leur phase aqueuse contient moins de 10 %, déterminée selon la méthode précitée, de la quantité d'agent d'aide au broyage initialement introduite dans la suspension avant l'opération de broyage.

En pratique, l'opération de broyage de la substance minérale à affiner consiste à broyer la substance minérale avec un corps broyant en particules très fines dans un milieu aqueux contenant initialement tout ou partie de la quantité de l'agent d'aide au broyage avec des conditions de conduite de broyage réglée de telle façon que le pH final de la suspension broyée soit compris entre 8 et 10, préférentiellement entre 8,5 et 9,5.

On forme une suspension aqueuse de la substance minérale à broyer.

Lors de la mise en oeuvre initiale d'une partie de la quantité de l'agent d'aide au broyage, le complément est ajouté en parallèle au cours de l'opération mécanique de broyage.

A la suspension de la substance minérale à broyer, on ajoute le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donné par le brevet FR 2 303 681 qui décrit des éléments broyants formés de 30 à 70 % en poids d'oxyde de zirconium, 0,1 à 5 % d'oxyde d'aluminium et de 5 à 20 % d'oxyde de silicium. Le corps broyant est de préférence ajouté à la suspension en une quantité telle que le rapport en poids entre ce matériau de broyage et la substance minérale à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments.

L'agent d'aide au broyage selon l'invention est également introduit, en une ou plusieurs fois, au sein du mélange formé par la suspension aqueuse de substances minérales et par le corps broyant à raison de 0,05 % à 5 % en poids, et préférentiellement de 0,2 % à 1,0 % en poids de la fraction séchée desdits polymères par rapport à la masse sèche de la substance minérale à affiner.

Le temps nécessaire pour aboutir à une excellente finesse de la substance minérale après broyage varie selon la nature et la quantité des substances minérales à broyer, et selon le mode d'agitation utilisé et la température du milieu pendant l'opération de broyage.

Les suspensions aqueuses de charges et/ou pigments obtenues par dispersion selon l'invention, se caractérisent plus particulièrement en ce qu'elles contiennent de 0,05 % à 5 % en poids sec dudit agent par rapport au poids sec total des charges et/ou pigments, et encore plus particulièrement 0,2 % à 1,0 % en poids sec dudit agent par rapport au poids sec total des charges et/ou pigments et en ce que leur phase aqueuse contient moins de 60 %, préférentiellement moins de 55 %, déterminée selon la méthode précitée, de la quantité d'agent de dispersion initialement introduite dans la suspension.

En pratique, l'opération de dispersion consiste à introduire la charge minérale dans une solution aqueuse contenant tout ou partie de l'agent dispersant, dont le complément est éventuellement ajouté en parallèle de l'ajout de la charge minérale.

Les suspensions aqueuses ainsi obtenues peuvent être utilisées dans le domaine du papier en charge de masse ou en couchage.

Les papiers fabriqués et/ou couchés se caractérisent en ce qu'ils contiennent lesdites suspensions aqueuses de charges et/ou pigments selon l'invention.

Les papiers fabriqués par la mise en oeuvre de la composition de charge de masse selon l'invention se caractérisent en ce qu'ils contiennent moins d'agent de rétention de charge minérale sur les fibres cellulosiques que les papiers de l'art antérieur.

Les papiers couchés par la mise en oeuvre de la sauce de couchage selon l'invention se caractérisent en ce qu'ils ont une imprimabilité accrue, c'est-à-dire une imprimabilité supérieure à l'imprimabilité des papiers couchés de l'art antérieur.

La portée et l'intérêt de l'invention seront mieux perçus grâce aux exemples suivants, qui ne sauraient être limitatifs.

EXEMPLE 1 :

Cet exemple concerne la sélection du taux de sites acides actifs restés non neutralisés et du taux d'un ou des agents au moins bifonctionnels caractéristiques de l'homopolymère et /ou copolymère destiné selon l'invention à être utilisé comme agent d'aide au broyage permettant l'obtention de suspension aqueuse de carbonate de calcium naturel affiné à quantité d'agent d'aide au broyage libre présent dans la phase aqueuse faible.

Pour chaque essai, on teste les différents agents d'aide au broyage par introduction, selon les quantités indiquées dans le tableau ci-après, exprimées en pour cent en poids sec par rapport à la masse de carbonate de calcium sec à broyer, de l'agent d'aide au broyage dans une suspension de carbonate de calcium à broyer.

Dans tous les essais de l'exemple, le carbonate de calcium à broyer est une calcite de granulométrie telle que 19 % des particules ont un diamètre inférieur à 2 micromètres.

La suspension circule dans un broyeur du type Dyno-Mill™ à cylindre fixe et impulseur tournant, dont le corps broyant est constitué par des billes de corindon de diamètre compris dans l'intervalle 0,6 millimètre à 1,0 millimètre.

Le volume total occupé par le corps broyant est de 1 150 centimètres cubes tandis que sa masse est de 2 900 g.

La chambre de broyage a un volume de 1 400 centimètres cubes.

La vitesse circonférentielle du broyeur est de 10 mètres par seconde.

La suspension de carbonate de calcium est recyclée à raison de 18 litres par heure.

La sortie du broyeur Dyno-Mill™ est munie d'un séparateur de mailles 200 microns permettant de séparer la suspension résultant du broyage et le corps broyant.

La température lors de chaque essai de broyage est maintenue à 60°C environ.

A la fin du broyage (To), on récupère dans un flacon un échantillon de la suspension pigmentaire. La granulométrie de cette suspension est mesurée à l'aide d'un granulomètre Sédigraph™ 5100 de la société Micromeritics.

Essai n° 1 :

Cet essai, qui illustre l'art antérieur, met en oeuvre une suspension, obtenue par broyage de calcite à 76,0 % en matière sèche et 1,00 % en poids sec, par rapport au poids sec de calcite, d'un polyacrylate de sodium totalement neutralisé de poids moléculaire moyen en poids $M_w$ égal à 7 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 95,0 % des particules ont un diamètre inférieur à 2 micromètres et un pourcentage d'agent d'aide au broyage libre présent dans la phase aqueuse de la suspension, mesuré selon la méthode décrite précédemment, égal à 48,0 %.

Essai n° 2 :

Cet essai, qui illustre l'art antérieur, met en oeuvre une suspension, obtenue par broyage de calcite à 75,0 % en matière sèche et 0,35 % en poids sec, par rapport au poids sec de calcite, d'un polyacrylate mixte de calcium et de sodium (30 % calcium - 70 % sodium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie de 60,2 % des particules ont un diamètre inférieur à 2 micromètres et un pourcentage d'agent d'aide au broyage libre présent dans la phase aqueuse de la suspension, mesuré selon la méthode décrite précédemment, égal à 15,0 %.

Essai n° 3 :

Cet essai, qui illustre l'art antérieur, met en oeuvre une suspension, obtenue par broyage de marbre à 74,9 % en matière sèche et 0,63 % en poids sec, par rapport au poids sec de marbre, d'un polyacrylate mixte de sodium et de calcium (70 % sodium - 30 % calcium en mole) de poids moléculaire moyen en poids $M_w$ égal à 4 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de marbre obtenue a une granulométrie de 89,1 % des particules ont un diamètre inférieur à 2 micromètres et un pourcentage d'agent d'aide au broyage libre présent dans la phase aqueuse de la suspension, mesuré selon la méthode décrite précédemment, égal à 21,6 %.

Essai n° 4 :

Cet essai, qui illustre un domaine hors de l'invention met en oeuvre une suspension, obtenue par broyage de calcite à 76,0 % en matière sèche et 1,00 % en poids sec, par rapport au poids sec de calcite, d' un polyacrylate de sodium (5 % carboxylique libre - 95 % sodium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie de 95,0 % des particules ont un diamètre inférieur à 1 micromètre et un pourcentage d'agent d'aide au broyage libre présent dans la phase aqueuse de la suspension, mesuré selon la méthode décrite précédemment, égal à 40,0 %.

Essai n° 5 :

Cet essai, qui illustre l'invention met en oeuvre une suspension, obtenue par broyage de calcite à 75,0 % en matière sèche et 0,60 % en poids sec, par rapport au poids sec de calcite, d'un polyacrylate mixte de sodium-calcium (10 % carboxylique libre - 70 % sodium, - 20 % calcium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 90,2 % des particules ont un diamètre inférieur à 2 micromètres et un pourcentage d'agent d'aide au broyage libre présent dans la phase aqueuse de la suspension, mesuré selon la méthode décrite précédemment, égal à 8,4 %.

Essai n° 6 :

Cet essai, qui illustre l'invention met en oeuvre une suspension, obtenue par broyage de calcite à 75,0 % en matière sèche et 0,30 % en poids sec, par rapport au poids sec de calcite, d' un polyacrylate mixte de sodium-calcium (20 % carboxylique libre - 70 % sodium - 10 % calcium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 59,7 % des particules ont un diamètre inférieur à 2 micromètres et un pourcentage d'agent d'aide au broyage libre présent dans la phase aqueuse de la suspension, mesuré selon la méthode décrite précédemment, égal à 9,5 %.

Essai n° 7 :

Cet essai, qui illustre l'invention met en oeuvre une suspension, obtenue par broyage de calcite à 75,3 % en matière sèche et 0,38 % en poids sec, par rapport au poids sec de calcite, d' un polyacrylate mixte de sodium-calcium (25 % carboxylique libre - 40 % sodium - 35 % calcium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 88,1 % des particules ont un diamètre inférieur à 2 micromètres et un pourcentage d'agent d'aide au broyage libre présent dans la phase aqueuse de la suspension, mesuré selon la méthode décrite précédemment, égal à 9,6 %.

Essai n° 8 :

Cet essai, qui illustre l'art antérieur, met en oeuvre une suspension, obtenue par broyage de calcite à 72,0 % en matière sèche et 0,65 % en poids sec, par rapport au poids sec de calcite, d'un polyacrylate mixte de magnésium et de sodium (50 % magnésium" 50 % sodium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie de 90,4 % des particules ont un diamètre inférieur à 2 micromètres et un pourcentage d'agent d'aide au broyage libre présent dans la phase aqueuse de la suspension, mesuré selon la méthode décrite précédemment, égal à 13,0 %.

Essai n° 9 :

Cet essai, qui illustre l'invention met en oeuvre une suspension, obtenue par broyage de calcite à 72,0 % en matière sèche et 0,65 % en poids sec, par rapport au poids sec de calcite, d'un polyacrylate mixte de sodium et de magnésium (25 % carboxylique libre-25 % sodium - 50 % magnésium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 89,7 % des particules ont un diamètre inférieur à 2 micromètres et un pourcentage d'agent d'aide au broyage libre présent dans la phase aqueuse de la suspension, mesuré selon la méthode décrite précédemment, égal à 5,4 %.

Essai n° 10 :

Cet essai, qui illustre l'invention met en oeuvre une suspension, obtenue par broyage de calcite à 72,0 % en matière sèche et 0,65 % en poids sec, par rapport au poids sec de calcite, d'un polyacrylate mixte de sodium et de magnésium (25 % carboxylique libre-45 % sodium - 30 % magnésium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 90,3 % des particules ont un diamètre inférieur à 2 micromètres et un pourcentage d'agent d'aide au broyage libre présent dans la phase aqueuse de la suspension, mesuré selon la méthode décrite précédemment, égal à 8,2 %.

Essai n° 11 :

Cet essai, qui illustre l'invention met en oeuvre une suspension, obtenue par broyage de calcite à 75,0 % en matière sèche et 0,60 % en poids sec, par rapport au poids sec de calcite, d'un polyacrylate mixte de sodium et de magnésium (10 % carboxylique libre-30 % sodium - 60 % magnésium en mole) de poids moléculaire moyen en poids $M_w$ égal à 3 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 90,5 % des particules ont un diamètre inférieur à 2 micromètres et un pourcentage d'agent d'aide au broyage libre présent dans la phase aqueuse de la suspension, mesuré selon la méthode décrite précédemment, égal à 9,9 %.

Essai n° 12 :

Cet essai, qui illustre l'invention met en oeuvre une suspension, obtenue par broyage de calcite à 75,0 % en matière sèche et 0,60 % en poids sec, par rapport au poids sec de calcite, d'un copolymère acide acrylique- phosphate de méthacrylate d'éthylène glycol- méthacrylate de méthyle (respectivement 54,6 % - 34,6 % - 10,8 % en poids) mixte de magnésium et de sodium (20 % carboxylique libre- 40 % magnésium - 40 % sodium en mole) de poids moléculaire moyen en poids $M_w$ égal à 15 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 80,4 % des particules ont un diamètre inférieur à 2 micromètres et un pourcentage d'agent d'aide au broyage libre présent dans la phase aqueuse de la suspension, mesuré selon la méthode décrite précédemment, égal à 9,3 %.

Essai n° 13 :

Cet essai, qui illustre l'invention met en oeuvre une suspension, obtenue par broyage de calcite à 75,0 % en matière sèche et 0,60 % en poids sec, par rapport au poids sec de calcite, d'un polyacrylate mixte de zinc et de sodium (20 % carboxylique libre -10 % zinc - 70 % sodium en mole) de poids moléculaire moyen en poids $M_w$ égal à 12 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 60,1 % des particules ont un diamètre inférieur à 2 micromètres et un pourcentage d'agent d'aide au broyage libre présent dans la phase aqueuse de la suspension, mesuré selon la méthode décrite précédemment, égal à 9,6 %.

Essai n° 14 :

Cet essai, qui illustre l'invention met en oeuvre une suspension, obtenue par broyage de calcite à 75,0 % en matière sèche et 0,60 % en poids sec, par rapport au poids sec de calcite, d'un polyacrylate mixte de magnésium et de sodium (50 % carboxylique libre -10 % magnésium - 40 % sodium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 82,0 % des particules ont un diamètre inférieur à 2 micromètres et un pourcentage d'agent d'aide au broyage libre présent dans la phase aqueuse de la suspension, mesuré selon la méthode décrite précédemment, égal à 9,0 %.

Essai n° 15 :

Cet essai, qui illustre l'invention met en oeuvre une suspension, obtenue par broyage de calcite à 75,0. % en matière sèche et 0,60 % en poids sec, par rapport au poids sec de calcite, d'un copolymère acide acrylique- anhydride maléique (respectivement 70 %-30 % en poids) mixte de sodium et de magnésium (35 % carboxylique libre- 50 % sodium - 15 % magnésium en mole) de poids moléculaire moyen en poids $M_w$ égal à 25 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 57,9 % des particules ont un diamètre inférieur à 2 micromètres et un pourcentage d'agent d'aide au broyage libre présent dans la phase aqueuse de la suspension, mesuré selon la méthode décrite précédemment, égal à 9,7 %.

Essai n° 16 :

Cet essai, qui illustre l'invention met en oeuvre une suspension, obtenue par broyage de calcite à 75,0 % en matière sèche et 0,60 % en poids sec, par rapport au poids sec de calcite, d'un copolymère acide acrylique- acide acrylamido méthyl propane sulfonique (respectivement 60 % - 40 % en poids) mixte de sodium et de calcium (25 % carboxylique libre- 45 % sodium - 30 % calcium en mole) de poids moléculaire moyen en poids $M_w$ égal à 20 000, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 81,3 % des particules ont un diamètre inférieur à 2 micromètres et un pourcentage d'agent d'aide au broyage libre présent dans la phase aqueuse de la suspension, mesuré selon la méthode décrite précédemment, égal à 8,7 %.

Essai n° 17 :

Cet essai, qui illustre l'invention met en oeuvre une suspension, obtenue par broyage de calcite à 75,0 % en matière sèche et 0,60 % en poids sec, par rapport au poids sec de calcite, d'un copolymère acide acrylique- acrylamide (respectivement 70 %-30 % en poids) mixte de sodium et de magnésium (30 % carboxylique libre - 55 % sodium - 15 % magnésium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de calcite obtenue a une granulométrie telle que 87,9 % des particules ont un diamètre inférieur à 2 micromètres et un pourcentage d'agent d'aide au broyage libre présent dans la phase aqueuse de la suspension, mesuré selon la méthode décrite précédemment, égal à 9,5 %.

Les résultats des différents essais sont rassemblés dans les tableaux 1a. et 1b. suivants.

TABLEAU 1a

| | Essai n° | Quantité d'agent (%) | % molaire de neutralisation | | | | Granulométrie (% < 2 $\mu$m) | Concentration en matière sèche | % agent d'aide au broyage libre |
|---|---|---|---|---|---|---|---|---|---|
| | | | COOH | Ca | Mg | Na | | | |
| Art antérieur | 1 | 1,00 | 0 | 0 | 0 | 100 | 95,0 | 76,0 | 48,0 |
| Art antérieur | 2 | 0,35 | 0 | 30 | 0 | 70 | 60,2 | 75,0 | 15,0 |
| Art antérieur | 3 | 0,63 | 0 | 30 | 0 | 70 | 89,1 | 74,9 | 21,6 |
| Hors invention | 4 | 1,00 | 5 | 0 | 0 | 95 | 95,0 | 76,0 | 40,0 |
| Invention | 5 | 0,60 | 10 | 20 | 0 | 70 | 90,2 | 75,0 | 8,4 |
| Invention | 6 | 0,30 | 20 | 10 | 0 | 70 | 59,7 | 75,0 | 9,5 |
| Invention | 7 | 0,38 | 25 | 35 | 0 | 40 | 88,1 | 75,3 | 9,6 |
| Art antérieur | 8 | 0,65 | 0 | 0 | 50 | 50 | 90,4 | 72,0 | 13,0 |
| Invention | 9 | 0,65 | 25 | 0 | 50 | 25 | 89,7 | 72,0 | 5,4 |
| Invention | 10 | 0,65 | 25 | 0 | 30 | 45 | 90,3 | 72,0 | 8,2 |

TABLEAU 1b

| | Essai n° | Quantité d'agent (%) | % molaire de neutralisation | | | | Granulométrie (% < 2 $\mu$m) | Concentration en matière sèche | % agent d'aide au broyage libre |
|---|---|---|---|---|---|---|---|---|---|
| | | | COOH | Ca | Mg | Na | | | |
| Invention | 11 | 0,60 | 10 | 0 | 60 | 30 | 90,5 | 75,0 | 9,9 |
| Invention | 12 | 0,60 | 20 | 0 | 40 | 40 | 80,4 | 75,0 | 9,3 |

(suite)

| | Essai n° | Quantité d'agent (%) | % molaire de neutralisation | | | | Granulométrie (% < 2 $\mu$m) | Concentration en matière sèche | % agent d'aide au broyage libre |
|---|---|---|---|---|---|---|---|---|---|
| | | | COOH | Ca | Mg | Na | | | |
| Invention | 13 | 0,60 | 20 | 10 Zn | 0 | 70 | 60,1 | 75,0 | 9,6 |
| Invention | 14 | 0,60 | 50 | 0 | 10 | 40 | 82,0 | 75,0 | 9,0 |
| Invention | 15 | 0,60 | 35 | 0 | 15 | 50 | 57,9 | 75,0 | 9,7 |
| Invention | 16 | 0,60 | 25 | 30 | 0. | 45 | 81,3 | 75,0 | 8,7 |
| Invention | 17 | 0,60 | 30 | 0 | 15 | 55 | 87,9 | 75,0 | 9,5 |

La lecture des différents résultats des tableaux 1a. et 1b. permet de constater que, pour obtenir un pourcentage d'agent d'aide au broyage, libre présent dans la phase aqueuse de la suspension après broyage mesuré selon la méthode décrite précédemment inférieur à 10 %, la sélection du pourcentage molaire des sites acides actifs du polymère non neutralisés doit être compris entre 10 % et 60 % et celui de la neutralisation par au moins un agent de neutralisation au moins bifonctionnel doit être compris entre 10 % et 80 % pour obtenir les propriétés précitées, le complément à 100 % des sites acides actifs du polymère étant neutralisés par des agents de neutralisation monofonctionnels.

EXEMPLE 2 :

Cet exemple concerne la sélection du taux de sites acides actifs restés non neutralisés et du taux d'un ou des agents au moins bifonctionnels caractéristiques de l'homopolymère et /ou copolymère destiné selon l'invention à être utilisé comme agent de dispersion encore appelé agent dispersant permettant l'obtention de suspension aqueuse de charge minérale et plus particulièrement de carbonate de calcium synthétique à quantité faible d'agent dispersant libre présent dans la phase aqueuse.

Pour ce faire, on réalise l'essai par introduction, dans l'eau, de 0,73 pour cent en poids sec par rapport à la masse sèche de la charge minérale à disperser, de l'agent dispersant à tester.

Après homogénéisation, on prélève un échantillon de l'eau additivée en dispersant pour en mesurer le COT1 puis on introduit la charge minérale à disperser que l'on maintient sous agitation pendant 30 minutes.

L'agitation stoppée, un échantillon de la suspension aqueuse est prélevé pour en mesurer le COT2.

La détermination du pourcentage de dispersant libre contenu dans la phase aqueuse de la suspension aqueuse de particules minérales est faite de la même manière que précédemment.

Essai n° 18 :

Cet essai, qui illustre l'art antérieur, met en oeuvre une suspension de carbonate de calcium précipité (PCC) commercialisé par la société Solvay sous le nom de Socal™ P3 de concentration en matière sèche égale à 70 % et 0,73 % en poids sec, par rapport au poids sec de PCC, d'un polyacrylate de sodium totalement neutralisé de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de PCC obtenue a un pourcentage d'agent de dispersion libre présent dans la phase aqueuse de la suspension, mesuré selon la méthode décrite précédemment, égal à 67 %.

Essai n° 19 :

Cet essai, qui illustre l'invention met en oeuvre une suspension de PCC commercialisé par la société Solvay sous le nom de Socal™ P3 de concentration en matière sèche égale à 70 % et 0,7 % en poids sec, par rapport au poids sec de PCC, d'un polyacrylate mixte de sodium et de calcium (25 % carboxylique libre- 40 % sodium - 35 % calcium en mole) de poids moléculaire moyen en poids $M_w$ égal à 5 500, déterminé par GPC aqueuse dont les standards, utilisés comme étalons, appartiennent à une série de polyacrylates de sodium commercialisée par la société Polymer Standards Service sous les noms de PSS-PAA variant de 18K à 2K.

La suspension aqueuse de PCC obtenue a un pourcentage d'agent de dispersion libre présent dans la phase aqueuse de la suspension, mesuré selon la méthode décrite précédemment, égal à 51 %.

La lecture de ces différents résultats permet de constater que, pour obtenir un pourcentage de dispersant libre présent dans la phase aqueuse de la suspension obtenue par dispersion, mesuré selon la méthode décrite précédemment, inférieur à 60 %, préférentiellement inférieur à 55 %, la sélection du pourcentage molaire des sites acides actifs du polymère non neutralisés doit être comprise entre 10 % et 60 % et celui de la neutralisation par au moins un agent de neutralisation au moins bifonctionnel doit être comprise entre 10 % et 80 % pour obtenir les propriétés précitées, le complément à 100 % des sites acides actifs du polymère étant neutralisé par des agents de neutralisation monofonctionnels.

## Revendications

1. Utilisation d'homopolymères et/ou copolymères de l'acide acrylique et/ou méthacrylique avec un ou plusieurs monomères acryliques, vinyliques ou allyliques comme agent d'aide au broyage de matières minérales en suspension aqueuse **caractérisée :**

   - **en ce que** lesdits homopolymères et/ou copolymères de l'acide acrylique et/ou méthacrylique avec un ou plusieurs monomères acryliques, vinyliques ou allyliques présentent :

      - un pourcentage molaire de ses sites non neutralisés compris entre 10 et 60 %
      - un pourcentage molaire de ses sites neutralisés par un agent au moins bifonctionnel compris entre 10 et 80 %
      - le complément à 100 % des sites neutralisés par un agent monofonctionnel

   - et **en ce que** ledit agent est introduit à raison de 0,2 % à 1,0 % en poids sec par rapport au poids sec de matière minérale

2. Utilisation d'homopolymères et/ou copolymères de l'acide acrylique et/ou méthacrylique selon la revendication-1 1 **caractérisée en ce que** lesdits homopolymères et/ou copolymères de l'acide acrylique et/ou méthacrylique avec un ou plusieurs monomères acryliques, vinyliques ou allyliques présentent :

   - un pourcentage molaire de ses sites non neutralisés compris entre 15 et 30 %
   - un pourcentage molaire de ses sites neutralisés par un agent au moins bifonctionnel compris entre 15 et 60 %
   - le complément à 100 % des sites neutralisés par un agent monofonctionnel

3. Utilisation d'homopolymères et/ou copolymères de l'acide acrylique et/ou méthacrylique selon l'une des revendications 1 à 2 **caractérisée en ce que** les agents de neutralisation au moins bifonctionnels sont choisis parmi les hydroxydes et/ou oxydes des cations alcalino-terreux ou métalliques, tels que les hydroxydes et/ou oxydes de magnésium, calcium, baryum, zinc, aluminium, ou bien parmi les amines bifonctionnelles, ou leurs mélanges et sont préférentiellement choisis parmi les hydroxydes et/ou oxydes de calcium ou magnésium, et leurs mélanges.

4. Utilisation d'homopolymères et/ou copolymères de l'acide acrylique et/ou méthacrylique selon l'une des revendications 1 à 2 **caractérisée en ce que** les agents de neutralisation monofonctionnels sont choisis parmi les hydroxydes des cations alcalins, en particulier le sodium et le potassium, ou encore le lithium, l'ammoniaque, ou bien les amines primaires ou secondaires aliphatiques et/ou cycliques telles que les éthanolamines, la mono et diéthylamine ou encore la cyclohexylamine et sont très particulièrement choisis parmi les composés contenant l'ion sodium.

5. Utilisation d'homopolymères et/ou copolymères de l'acide acrylique et/ou méthacrylique selon l'une des revendications 1 à 4 **caractérisée en ce que** lesdits homopolymères et/ou copolymères de l'acide acrylique et/ou méthacrylique avec un ou plusieurs monomères acryliques, vinyliques ou allyliques ont un poids moléculaire moyen en poids $M_w$ compris entre 1 000 et 50 000, préférentiellement entre 3 500 et 25 000, déterminé par chromatographie par perméation de gel (GPC) aqueuse dont les standards, utilisés comme étalons, appartiennent à une série de polyacrylates de sodium commercialisée par la société Polymer Standards Service sous les noms de PSS-PAA variant de 18K à 2K.

6. Utilisation d'homopolymères et/ou copolymères de l'acide acrylique et/ou méthacrylique selon l'une des revendications 1 à 5 **caractérisée en ce que** ledit agent est un homopolymère de l'acide acrylique ou méthacrylique.

**7.** Utilisation d'homopotymères et/ou copolymères de l'acide acrylique et/ou méthacrylique selon l'une des revendications 1 à 5 **caractérisée en ce que** ledit agent est un copolymère hydrosoluble de l'acide acrylique ou méthacrylique avec un ou plusieurs monomères acryliques, vinyliques ou allyliques choisi parmi l'acide acrylique, l'acide méthacrylique, l'acide itaconique, l'acide crotonique, l'acide fumarique, l'anhydride maléique et/ou l'acide 2-acrylamido-2-méthyl-1-propane sulfonique sous forme acide ou partiellement neutralisée, l'acide 2-méthacrylamido-2-méthyl-1-propane sulfonique sous forme acide ou partiellement neutralisée, l'acide 3-méthacrylamido-2-hydroxy-l-propane sulfonique sous forme acide ou partiellement neutralisée, l'acide allylsulfonique, l'acide méthallylsulfonique, l'acide allyloxybenzène sulfonique, l'acide méthallyloxybenzène sulfonique, l'acide 2-hydroxy-3-(2-propényloxy) propane sulfonique, l'acide 2-méthyl-2-propène-1-sulfonique, l'acide éthylène sulfonique, l'acide propène sulfonique, l'acide 2-méthyl sulfonique, l'acide styrène sulfonique et/ou ses sels, l'acide vinyl sulfonique, le méthallylsulfonate de sodium, l'acrylate ou méthacrylate de sulfopropyle, le sulfométhylacrylamide, le sulfométhylméthacrylamide ou encore parmi l'acrylamide, le méthylacrylamide, les esters des acides acryliques ou méthacryliques tels que notamment l'acrylate d'éthyle, l'acrylate de butyle, le méthacrylate de méthyle, le phosphate d'acrylate ou méthacrylate d'éthylène ou propylène glycol ou bien encore parmi la vinylpyrrolidone, le vinylcaprolactame, l'isobutylène, le diisobutylène, l'acétate de vinyle, le styrène, l'alphaméthylstyrène, le vinylméthyléther, les allyliques tels que l'allylamine et ses dérivés.

**8.** Utilisation d'homopolymères et/ou copolymères de l'acide acrylique et/ou méthacrylique selon l'une des revendications 1 à 7 **caractérisée en ce que** ledit agent issu de la réaction de polymérisation peut, éventuellement avant ou après la réaction de neutralisation, être traité et séparé en plusieurs phases, selon des procédés statiques ou dynamiques connus de l'homme de l'art, par un ou plusieurs solvants polaires appartenant au groupe constitué par l'eau, le méthanol, l'éthanol, le propanol, l'isopropanol, les butanols, l'acétone, le tétrahydrofurane ou leurs mélanges.

**9.** Utilisation d'homopolymères et/ou copolymères de l'acide acrylique et/ou méthacrylique selon l'une des revendications 1 à 8 **caractérisée en ce que** ledit agent est sous forme de poudre.

**10.** Suspension aqueuse de particules minérales obtenue par broyage **caractérisée en ce qu'**elle contient ledit agent d'aide au broyage mis en oeuvre selon l'une quelconque des revendications 1 à 9 et **en ce que** sa phase aqueuse contient moins de 10 % de la quantité d'agent d'aide au broyage initialement introduite dans la suspension avant l'opération de broyage, déterminée par la méthode de mesure du carbone organique totale dite méthode TOC.

**11.** Suspension aqueuse de particules minérales selon la revendication 10 **caractérisée en ce qu'**elle contient de 0,05 % à 5 % en poids sec, par rapport au poids sec de matière minérale, de l'agent d'aide au broyage mis en oeuvre selon l'une quelconque des revendications 1 à 10, préférentiellement de 0,2 % à 1,0 % en poids sec, par rapport au poids sec de matière minérale, et **en ce que** sa phase aqueuse contient moins de 10 % de la quantité d'agent d'aide au broyage initialement introduite dans la suspension avant l'opération de broyage, déterminée par la méthode de mesure du carbone organique totale dite méthode TOC.

**12.** Suspension aqueuse de particules minérales selon l'une quelconque des revendications 10 à 11 **caractérisée en ce que** les particules minérales sont choisies parmi le carbonate de calcium naturel tel que la calcite, la craie ou encore le marbre, le carbonate de calcium synthétique encore appelé carbonate de calcium précipité, les dolomies, l'hydroxyde de magnésium, le gypse, ou encore l'hydroxyde d'aluminium ou leurs mélanges.

**13.** Utilisation de la suspension aqueuse selon l'une quelconque des revendications 10 à 12 dans les domaines du couchage du papier et de la charge de masse lors de la fabrication de la feuille de papier.

**14.** Utilisation de la suspension aqueuse selon l'une quelconque des revendications 10 à 12 dans les domaines de la peinture et des matières plastiques.

**Claims**

**1.** Use of homopolymers and/or copolymers of acrylic and/or methacrylic acid with one or more acrylic, vinylic, or allylic monomers as a grinding agent for mineral materials in an aqueous suspension **characterized:**

- **in that** said homopolymers and/or copolymers of acrylic and/or methacrylic acid with one or more acrylic, vinylic, or allylic monomers exhibit:

- a molar percentage of its non-neutralized sites of between 10 and 60%
- a molar percentage of its sites neutralized by an at least bifunctional agent of between 10 et 80%
- the 100% complement of the sites neutralized by a monofunctional agent

- and **in that** said agent is added at a rate of 0.2% to 1.0% by dry weight in relation to the dry weight of mineral material.

2. Use of homopolymers and/or copolymers of acrylic and/or methacrylic acid according to claim 1 **characterized in that** said homopolymers and/or copolymers of acrylic and/or methacrylic acid with one or more acrylic, vinylic, or allylic monomers exhibit:

- a molar percentage of its non-neutralized sites of between 15 and 30%,
- a molar percentage of its sites neutralized by an at least bifunctional agent of between 15 et 60%,
- the 100% complement of the sites neutralized by a monofunctional agent.

3. Use of homopolymers and/or copolymers of acrylic and/or methacrylic acid according to one of the claims 1 to 2 **characterized in that** the at least bifunctional neutralization agents are chosen from among hydroxides and/or oxides of alkaline-earth or metallic cations, such as hydroxides and/or oxides of magnesium, calcium, barium, zinc, aluminium, or from among bifunctional amines, or mixtures thereof, and are preferentially chosen from among hydroxides and/or oxides of calcium or magnesium, and mixtures thereof.

4. Use of homopolymers and/or copolymers of acrylic and/or methacrylic acid according to one of the claims 1 to 2 **characterized in that** the monofunctional neutralization agents are chosen from among hydroxides of alkaline cations, in particular sodium and potassium, or lithium, ammonium hydroxide, or the primary or secondary aliphatic and/or cyclic amines such as ethanolamines, mono- and diethylamine, or also cyclohcxylamine, and are particularly chosen from among compounds containing the sodium ion.

5. Use of homopolymers and/or copolymers of acrylic and/or methacrylic acid according to one of the claims 1 to 4 **characterized in that** said homopolymers and/or copolymers of acrylic and/or methacrylic acid with one or more acrylic, vinylic, or allylic monomers have an average molecular weight by weight of $M_w$, comprised between 1,000 and 50,000, preferentially between 3,500 and 25,000, determined by aqueous gel permeation chromatography (GPC) whose references, used as standards, belong to a series of sodium polyacrylates sold by the company Polymer Standards Service under the names PSS-PAA varying from 18K to 2K.

6. Use of homopolymers and/or copolymers of acrylic and/or methacrylic acid according to one of the claims 1 to 5 **characterized in that** said agent is a homopolymer of acrylic or methacrylic acid.

7. Use of homopolymers and/or copolymers of acrylic and/or methacrylic acid according to one of the claims 1 to 5 **characterized in that** said agent is a watersoluble copolymer of acrylic and/or methacrylic acid with one or more acrylic, vinylic, or allylic monomers chosen from among acrylic acid, methacrylic acid, itaconic acid, crotonic acid, fumaric acid, maleic anhydride, and/or 2-acrylamido-2-methyl-1-propane sulfonic acid in acid form or partially neutralized form, 2-methacrylamido-2-methyl-1-propane sulfonic acid in acid form or partially neutralized form, 3-methacrylamido-2-hydroxy-1-propane sulfonic acid in acid form or partially neutralized form, allylsulfonic acid, methallylsulfonic acid, allyloxybenzene sulfonic acid, methallyloxybenzene sulfonic acid, 2-hydroxy-3-(2-propenyloxy)propane sulfonic acid, 2-methyl-2-propene-1-sulfvnic acid, sulfonic ethylene acid, sulfonic propene acid, 2-methyl sulfonic acid, sulfonic styrene acid and/or its salts, vinyl sulfonic acid, sodium methallylsulfonate, sulfopropyl acrylate or methacrylate, sulfomethylacrylamide, sulfomethylmethacrylamide, or from among acrylamide, methylacrylamide, esters of acrylic or methacrylic acids particularly including ethyl acrylate, butyl acrylate, methyl methacrylate, acrylate phosphate, or ethylene methacrylate or propylene glycol, or from among vinylpyrrolidone, vinylcaprolactame, isobutylene, diisobutylene, vinyl acetate, styrene, alphamethylstyrene, vinylmethylether, allylics such as allylamine and its derivatives.

8. Use of homopolymers and/or copolymers of acrylic and/or methacrylic acid according to one of the claims 1 to 7 **characterized in that** said agent derived from the polymerization reaction may, potentially before or after the neutralization reaction, be treated and separated into multiple phases, based on static or dynamic processes known to the person skilled in the art, by one or more polar solvents belonging to the group made up of water, methanol, ethanol, propanol, isopropanol, butanols, acetone, tetrahydrofurane, or mixtures thereof.

9. Use of homopolymers and/or copolymers of acrylic and/or methacrylic acid according to one of the claims 1 to 8 **characterized in that** said agent is in powdered form.

10. An aqueous suspension of mineral particles obtained by grinding **characterized in that** it contains said grinding agent implemented according to any one of the claims 1 to 9 and **in that** its aqueous phase contains less than 10% of the quantity of grinding agent initially added to the suspension prior to the grinding operation, determined by the total organic carbon, or TOC, measurement method.

11. An aqueous suspension of mineral particles according to claim 10 **characterized in that** it contains 0.05% to 5% by dry weight, in relation to the dry weight of mineral materials, of the grinding agent implemented according to any one of the claims 1 to 9, preferentially 0.2% to 1.0% by dry weight, in relation to the dry weight of mineral materials, and **in that** its aqueous phase contains less than 10% of the quantity of grinding agent initially added into the suspension before the grinding operation, determined by the total organic carbon, or TOC, measurement method.

12. An aqueous suspension of mineral particles according to one of the claims 10 to 11, **characterized in that** the mineral particles are chosen from among natural calcium carbonate such as calcite, chalk, or marble, synthetic calcium carbonate, also known as precipitated calcium carbonate, dolomites, magnesium hydroxide, gypsum, or aluminium hydroxide or mixtures thereof.

13. Use of the aqueous suspension according to any one of the claims 10 to 12 in the domains of paper-coating and mass filler in the manufacturing of sheets of paper.

14. Use of the aqueous suspension according to any one of the claims 10 to 12 in the domains of paint and plastic materials.

**Patentansprüche**

1. Verwendung von Homopolymeren und/oder Copolymeren der Acryl- und/oder Methacrylsäure mit einem oder mehreren Acryl-, Vinyl- oder Allylmonomeren als Mahlhilfsmittel für Mineralstoffe in wässriger Suspension, **dadurch gekennzeichnet, dass**:

   - die besagten Homopolymere und/oder Copolymere der Acryl- und/oder Methacrylsäure mit einem oder mehreren Acryl-, Vinyl- oder Allylmonomeren aufweisen:

      - Ein Molekularprozent ihrer nicht neutralisierten Teile zwischen 10 und 60 %
      - ein Molekularprozent ihrer durch ein zumindest bifunktionelles Mittel neutralisierten Teile zwischen 10 und 80 %
      - das Komplement bis 100 % der durch ein monofunktionelles Mittel neutralisierten Teile

   - dass das besagte Mittel mit 0,2 % bis 1,0 % Trockengewicht im Verhältnis zum Trockengewicht des Mineralstoffes beigemischt wird.

2. Verwendung von Homopolymeren und/oder Copolymeren der Acryl- und/oder Methacrylsäure nach Anspruch 1, **dadurch gekennzeichnet, dass** die besagten Homopolymere und/oder Copolymere der Acryl- und/oder Methacrylsäure mit einem oder mehreren Acryl-, Vinyl- oder Allylmonomeren aufweisen:

   - Ein Molekularprozent ihrer nicht neutralisierten Teile zwischen 15 und 30 %
   - ein Molekularprozent ihrer durch ein zumindest bifunktionelles Mittel neutralisierten Teile zwischen 15 und 60 %
   - das Komplement bis 100 % der durch ein monofunktionelles Mittel neutralisierten Teile.

3. Verwendung von Homopolymeren und/oder Copolymeren der Acryl- und/oder Methacrylsäure nach einem der Ansprüche 1 bis 2, **dadurch gekennzeichnet, dass** die zumindest bifunktionellen Neutralisationsmittel unter den Hydroxiden und/oder Oxiden der Erdalkali- oder Metallkationen wie die Magnesium-, Calcium-, Barium-, Zink-, Aluminiumhydroxide und/oder -oxide oder auch unter den bifunktionellen Aminen oder Gemischen daraus gewählt werden, und vorzugsweise unter den Calcium- oder Magnesiumhydroxiden und/oder oxiden und Gemischen daraus gewählt werden.

**4.** Verwendung von Homopolymeren und/oder Copolymeren der Acryl- und/oder Methacrylsäure nach einem der Ansprüche 1 bis 2, **dadurch gekennzeichnet, dass** die monofunktionellen Neutralisationsmittel unter den Hydroxiden der Alkali-Kationen, insbesondere Natrium und Potassium, oder auch Lithium, Ammoniak, oder noch primäre oder sekundäre aliphatische und/oder cyclische Amine wie Ethanolamine, Mono- und Diethylamin oder auch Cyclohexylamin gewählt werden, und ganz besonders unter Natriumion enthaltenen Zusammensetzungen gewählt werden.

**5.** Verwendung von Homopolymeren und/oder Copolymeren der Acryl- und/oder Methacrylsäure nach einem der Ansprüche 1 bis 4, **dadurch gekennzeichnet, dass** die besagten Homopolymere und/oder Copolymere der Acryl- und/oder Methacrylsäure mit einem oder mehreren Acryl-, Vinyl- oder Allylmonomeren ein durchschnittliches Molekulargewicht, ausgedrückt in $M_W$-Gewicht, zwischen 1 000 und 50 000, vorzugsweise zwischen 3 500 und 25 000 aufweisen, bestimmt durch wässrige Gelpermeations-Chromatographie (GPC), deren als Normalmaß verwendete Standards einer Serie von Natriumpolyacrylaten, vertrieben von der Firma Polymer Standards Service unter den Bezeichnungen PSS-PAA, welche zwischen 18K und 2K variieren, angehören, aufweisen.

**6.** Verwendung von Homopolymeren und/oder Copolymeren der Acryl- und/oder Methacrylsäure nach einem der Ansprüche 1 bis 5, **dadurch gekennzeichnet, dass** besagte Mittel ein Homopolymcr der Acryl- oder Methacrylsäure ist.

**7.** Verwendung von Homopolymeren und/oder Copolymeren der Acryl- und/oder Methacrylsäure nach einem der Ansprüche 1 bis 5, **dadurch gekennzeichnet, dass** das besagte Mittel ein wasserlösliches Copolymer der Acryl- oder Methacrylsäure mit einem oder mehreren Acryl-, Vinyl- oder Allylmonomeren gewählt unter Acrylsäure, Methacrylsäure, Itaconsäure, Crotonsäure, Fumarsäure, Maleinanhydrid und/oder 2-Acrylamido-2-Methyl-1-Propansulfonsäure in saurer oder teilneutralisierter Form, 2-Methacrylamido-2-Methyl-1-Propansulfonsäure in saurer oder teilneutralisierter Form, 3-Methacrylamido-2-Hydroxy-1-Propansulfonsäure in saurer oder teilneutralisierter Form, Allylsulfonsäure, Methallylsulfonsäure, Allyloxybenzolsulfonsäure, Methallyloxybenzolsulfonsäure, 2-Hydroxy-3-(2-propenyloxy)Propansulfonsäure, 2-Methyl-2-Propen-1-Sulfonsäure, Ethylensulfonsäure, Propensulfonsäure, 2-Methylsulfonsäure, Styrolsulfonsäure und/oder deren Salze, Vinylsulfonsäure, Natriummethallylsulfonat, Sulfopropylacrylat oder -methacrylat, Sulfomethylacrylamid, Sulfomethylmethacrylamid oder auch unter Acrylamid, Methylacrylamid, Ester der Acryl- oder Methacrylsäuren, wie insbesondere Ethylacrylat, Butylacrylat, Methylmethacrylat, Ethylenacrylatphosphat oder Ethylenmethacrylatphosphat oder Propylenglykolacrylatphosphat oder Propylenglykolmethacrylatphosphat, oder auch unter Vinylpyrrolidon, Vinylcaprolactam, Isobutylen, Diisobutylen, Vinylacetat, Styrol, Alphamethylstyrol, Vinylmethylether, Allyle wie Allylamin und deren Derivate ist.

**8.** Verwendung von Homopolymeren und/oder Copolymeren der Acryl- und/oder Methacrylsäure nach einem der Ansprüche 1 bis 7, **dadurch gekennzeichnet, dass** das besagte aus der Polymerisationsreaktion gewonnene Mittel gegebenenfalls vor oder nach der Neutralisationsrekation gemäß dem Fachmann bekannten statischen oder dynamischen Verfahren mit einem oder mehreren polaren Lösemittel, welcher der Gruppe bestehend aus Wasser, Ethanol, Propanol, Isopropanol, Butanol, Aceton, Tetrahydrofuran oder Gemischen daraus angehören, behandelt und in mehrere Phasen getrennt werden kann.

**9.** Verwendung von Homopolymeren und/oder Copolymeren der Acryl- und/oder Methacrylsäure nach einem der Ansprüche 1 bis 8, **dadurch gekennzeichnet, dass** das besagte Mittel die Pulverform aufweist.

**10.** Wässrige Suspension von Mineralpartikeln, welche durch Mahlen gewonnen wird, **dadurch gekennzeichnet, dass** sie das besagte gemäß einem beliebigen der Ansprüche 1 bis 9 verwendete Mahlhilfsmittel, welches der Suspension ursprünglich vor dem Mahlvorgang beigemischt wurde, enthält, bestimmt durch das Messverfahren des gesamten organischen Kohlenstoffes, das sogenannte TOC-Verfahren.

**11.** Wässrige Suspension von Mineralpartikeln nach Anspruch 10, **dadurch gekennzeichnet, dass** sie zwischen 0,05 und 5 Trockengewichtsprozent, im Verhältnis zum Trockengewicht des Mineralstoffes, des gemäß einem beliebigen der Ansprüche 1 bis 9 verwendeten Mahlhilfsmittel, vorzugsweise zwischen 0,2 und 1,0 Trockengewichtsprozent im Verhältnis zum Trockengewicht des Mineralstoffes, enthält, und dass ihre wässrige Phase weniger als 10 % der ursprünglich der Suspension vor dem Mahlvorgang beigemischten Mahlhilfsmittelmenge enthält, bestimmt durch das Messverfahren des gesamten organischen Kohlenstoffes, das sogenannte TOC-Verfahren.

**12.** wässrige Suspension von Mineralpartikeln nach einem beliebigen der Anspruche 10 bis 11, **dadurch gekennzeichnet, dass** die Mineralpartikel unter natürlichem Calciumcarbonat wie Kalkspat, Kreide oder auch Marmor, synthetischem Calciumcarbonat, ebenfalls gefälltes Calciumcarbonat genannt, Dolomiten, Magnesiumhydroxid, Gips, oder auch Aluminiumhydroxid oder Gemischen daraus gewählt werden.

13. Verwendung der wässrigen Suspension gemäß einem beliebigen der Ansprüche 10 bis 12 im Bereich der Papierstreichmassen und Füllmassen während der Fertigung der Papierfolie.

14. Verwendung der wässrigen Suspension gemäß einem beliebigen der Ansprüche 10 bis 12 im Bereich der Anstrichmittel und der Kunststoff.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2603042
- EP 0100947 A
- EP 0127388 A
- EP 0129329 A
- EP 0278880 A
- EP 0542644 A
- EP 0850282 A
- FR 2488814
- EP 0100948 A
- EP 0542643 A
- FR 2303681